# EUROPÄISCHE PATENTSCHRIFT

(11) **EP 2 473 942 B1**
(45) Veröffentlichungstag und Bekanntmachung des Hinweises auf die Patenterteilung: **27.11.2019**
(21) Anmeldenummer: 10755121.0
(22) Anmeldetag: 01.09.2010
(51) Int. Cl.: G06F 21/44, G06F 21/62, G06F 21/77, G06Q 20/34, G07C 9/00, H04L 9/32

(54) **VERFAHREN UND SYSTEM ZUM AKTIVIEREN EINES TRAGBAREN DATENTRÄGERS**
METHOD TO ACTIVATE A MOBILE MEMORY
METHODE POUR ACTIVER UN MEMOIRE MOBILE

(30) Priorität: 03.09.2009 DE 102009040027
(43) Veröffentlichungstag der Anmeldung: 11.07.2012
(73) Patentinhaber: Giesecke+Devrient Mobile Security GmbH, 81677 München (DE)
(72) Erfinder: EICHHOLZ, Jan, 80997 München (DE); MEISTER, Gisela, 81737 München (DE); DAUM, Henning, 81673 München (DE)
(74) Vertreter: Klunker IP Patentanwälte PartG mbB
(86) Internationale Anmeldenummer: PCT/EP2010/062784
(87) Internationale Veröffentlichungsnummer: WO 2011/026854

(56) Entgegenhaltungen:
- EP-A1- 1 662 425
- WO-A1-2008/000297
- WO-A2-2004/027715
- WO-A2-2004/105421
- US-A1- 2007 226 793

## Beschreibung

Die Erfindung betrifft ein Verfahren und ein System zum Aktivieren eines tragbaren Datenträgers, z.B. in der Form einer Chipkarte.

Heutzutage werden in einer Vielzahl von Anwendungen tragbare Datenträger verwendet, welche für eine vorgegebene Person personalisiert sind und nur zur Nutzung durch diese Person vorgesehen sind. Auf solchen Datenträgern sind häufig hochsensible persönliche Daten des Benutzers gespeichert. Um Missbrauch zu vermeiden, muss deshalb sichergestellt werden, dass der personalisierte Datenträger auch demjenigen Benutzer übergeben wird, für den der Datenträger personalisiert wurde. Somit ist beispielsweise bei der Beantragung von tragbaren Datenträgern in der Form von elektronischen Identitätsdokumenten, wie z.B. eines elektronischen Passes, in der Regel das persönliche Erscheinen des Antragsstellers bei der Beantragung und Herausgabe des elektronischen Identitätsdokuments erforderlich.

In dem Dokument WO 2004/ 027715 A2 ist ein System zur Personalisierung und Herausgabe von Identitätsdokumenten beschrieben, bei dem dezentral über eine Personalisierungseinheit ein Dokument personalisiert werden kann. Dabei ist im Personalisierungsprozess eine zentrale Kontrollinstanz zwischengeschaltet, mit der die Personalisierungseinheit zur Autorisierung der Personalisierung eines Dokuments kommuniziert. Es muss somit eine Datenverbindung zwischen Personalisierungseinheit und zentraler Instanz zur Durchführung der Personalisierung aufgebaut werden.

In dem Dokument EP 0 479 982 B1 ist die Übertragung von Geldwerten zwischen tragbaren Datenträgern in der Form von elektronischen Geldbörsen beschrieben, wobei die Übertragung eines Geldwerts direkt zwischen den Geldbörsen ohne Zwischenschaltung eines Computersystems erfolgen kann.

Aus der US 2007/0226793 A1 ist ein Verfahren zur Übertragung von Sicherheitsfunktionalität von einer "Elternkarte" auf eine "Kindkarte" bekannt. Die Elternkarte erhält von einer Zertifizierungsstelle ein Zertifikat mit dem öffentlichen Schlüssel der Zertifizierungsstelle. Die Elternkarte erzeugt ferner ihrerseits ein Zertifikat, das in der Kindkarte hinterlegt wird. Das von der Elternkarte erzeugte Zertifikat beinhaltet eine mittels des geheimen Schlüssels der Elternkarte gebildete Signatur über den öffentlichen Schlüssel der Kindkarte; zudem beinhaltet es das von der Zertifizierungsstelle ausgegebene Grundzertifikat. Durch kaskadiertes Auflösen des verschachtelten Zertifikats der Elternkarte kann die Kindkarte eindeutig auf die Elternkarte zurückgeführt und damit authentisiert werden. Nach erfolgreicher Authentisierung überträgt der Kartenherausgeber Berechtigungsdaten an die Kindkarte, mit denen diese anschließend wie eine Elternkarte verwendet werden kann. Das Schachtelverfahren lässt sich grundsätzlich über beliebig viele Kartengenerationen fortsetzen. Die Bildung der verschachtelten Zertifikate und die Übertragung von Kartenfunktionalitäten erfolgen an einer als Mittlereinrichtung, an der Eltern- und Kindkarte gleichzeitig präsentiert werden. Zwischen Eltern- und Kindkarte wird dabei eine sichere Verbindung aufgebaut. Das Verfahren erfordert nach Aufbau der sicheren Verbindung zwischen Eltern- und Kindkarte die Einbindung des Kartenherausgebers.

Aufgabe der Erfindung ist es, ein Verfahren und ein System zum Aktivieren eines tragbaren Datenträgers zu schaffen, welche einfach, sicher und benutzerfreundlich eine Aktivierung des Datenträgers ohne unmittelbare Beteiligung einer zentralen Instanz ermöglichen.

Diese Aufgabe wird durch das Verfahren gemäß Patentanspruch 1 gelöst. Weiterbildungen der Erfindung sind in den abhängigen Ansprüchen definiert.

In dem erfindungsgemäßen Verfahren wird einem Benutzer ein erster tragbarer Datenträger in einem inaktiven Zustand bereitgestellt, nachdem der Benutzer den ersten Datenträger mit Hilfe eines zweiten tragbaren Datenträgers bei einer zentralen Instanz beantragt hat. Unter inaktivem Zustand ist ein solcher Zustand zu verstehen, bei dem eine bestimmungsgemäße Verwendung des tragbaren Datenträgers nicht möglich ist. Insbesondere wird im inaktiven Zustand sichergestellt, dass die auf dem tragbaren Datenträger bereits hinterlegten Daten nicht durch unbefugte Dritte ausgelesen bzw. kopiert werden können. Eine zentrale Instanz stellt im Sinne der Erfindung eine Institution dar, wie z.B. eine Behörde, welche zur Herausgabe des entsprechenden Datenträgers berechtigt ist. Wird das Verfahren beispielsweise zum Aktivieren eines neuen elektronischen Ausweisdokuments verwendet, ist diese zentrale Instanz insbesondere die entsprechende Regierungsbehörde, die zur Herausgabe von elektronischen Ausweisdokumenten berechtigt ist. In dem erfindungsgemäßen Verfahren haben der erste und zweite Datenträger Zugriff auf entsprechende Authentisierungsdaten zum gegenseitigen Authentisieren. Diese Authentisierungsdaten sind dabei vorzugsweise direkt auf dem ersten und zweiten tragbaren Datenträger abgelegt. Zur Aktivierung des ersten Datenträgers wird erfindungsgemäß zunächst eine Kommunikationsverbindung zwischen dem ersten und zweiten Datenträger aufgebaut, über welche sich der erste und zweite Datenträger basierend auf den Authentisierungsdaten gegenseitig authentisieren und eine kryptographisch gesicherte Ende-zu-Ende-Verbindung herstellen. Über diese kryptographisch gesicherte Ende-zu-Ende-Verbindung wird sichergestellt, dass die darüber übertragenen Daten nur von dem ersten und zweiten Datenträger verarbeitbar sind und nicht durch Dritte ausgelesen bzw. verarbeitet werden können. Über die Ende-zu-Ende-Verbindung aktiviert dann der zweite Datenträger den ersten Datenträger durch Übermitteln von Aktivierungsdaten an den ersten Datenträger.

Das erfindungsgemäße Verfahren zeichnet sich dadurch aus, dass ein Benutzer ohne Zwischenschaltung einer weiteren Instanz den ihm bereitgestellten ersten Datenträger durch eine direkte Datenübertragung mit Hilfe des zweiten Datenträgers aktivieren kann. Durch die Verwendung einer kryptographisch gesicherten Ende-zu-Ende-Verbindung wird dabei ein ausreichender Schutz von Manipulationen erreicht. Hierdurch kann eine einfache Aktivierung eines beantragten ersten Datenträgers sichergestellt werden, ohne dass der Benutzer persönlich bei der zentralen Instanz erscheinen muss, bei der er den ersten Datenträger beantragt hat. Insbesondere kann der zu aktivierende erste Datenträger dem Benutzer direkt zugesandt werden. Da der erste tragbare Datenträger zunächst inaktiv ist, werden hierdurch auch Manipulationen bei der Übersendung des ersten Datenträgers an den Benutzer vermieden.

Das erfindungsgemäße Verfahren kann zur Aktivierung von beliebigen tragbaren Datenträgern eingesetzt werden. Ein bevorzugter Anwendungsfall ist die bereits oben erwähnte Aktivierung von elektronischen Ausweisdokumenten, wie z.B. elektronischen Personalausweisen bzw. Reisepässen. Das Verfahren kann jedoch auch zur Aktivierung von elektronischen Visa, elektronischen Fahrkarten oder elektronischen Gesundheitskarten eingesetzt werden. Ebenso können mit dem Verfahren auch elektronische Bankkarten, wie z.B. eine Kreditkarte oder eine andere Art von Bankkarte, aktiviert werden.

In einer besonders bevorzugten Ausführungsform des erfindungsgemäßen Verfahrens ist es noch nicht einmal erforderlich, dass der Benutzer bei der Beantragung des ersten Datenträgers persönlich bei der zentralen, den Datenträger herausgebenden Instanz erscheinen muss. Vielmehr kann auch eine Online-Beantragung, insbesondere über das Internet, vorgesehen sein. Während des Online-Prozesses werden dann entsprechende Daten des zweiten Datenträgers eingelesen bzw. vom Benutzer eingegeben, damit sichergestellt ist, dass auch die geeigneten Authentisierungsdaten auf dem ersten Datenträger zur Durchführung der späteren Authentisierung hinterlegt werden.

In einer weiteren Ausführungsform des erfindungsgemäßen Verfahrens kann der bereitgestellte erste Datenträger auch im inaktiven Zustand bereits zumindest teilweise optisch bzw. elektronisch personalisiert sein. Beispielsweise kann bei einer Beantragung eines neuen elektronischen Ausweisdokuments bereits eine optische Personalisierung dahingehend erfolgen, dass persönliche Daten, wie Name, Adresse, Geburtsdatum, und das Passbild des Benutzers auf dem Ausweisdokument aufgedruckt sind.

In einer weiteren Ausführungsform des erfindungsgemäßen Verfahrens ist die zwischen dem ersten und zweiten Datenträger aufgebaute Kommunikationsverbindung eine lokale Kommunikationsverbindung im Einflussbereich des Benutzers, insbesondere unter Zwischenschaltung eines lokalen Rechners. Auf diese Weise wird es insbesondere ermöglicht, dass ein Benutzer durch seinen eigenen Rechner von zu Hause aus den ersten Datenträger aktivieren kann. Dabei ist in einer besonders bevorzugten Variante eine entsprechende lokale Software zur Durchführung der Aktivierung auf dem Rechner des Benutzers hinterlegt. Diese Software ist vorzugsweise frei über das Internet verfügbar und kann von dem Benutzer zur Durchführung der Aktivierung auf seinen Rechner heruntergeladen werden.

Die gegenseitige Authentisierung des ersten und zweiten Datenträgers kann mit verschiedenen Verfahren erfolgen, welche an sich aus dem Stand der Technik bekannt sind. Beispielsweise kann eine symmetrische Authentisierung mit einem symmetrischen Schlüssel eingesetzt werden, bei der in jedem Datenträger ein symmetrischer Schlüssel hinterlegt ist bzw. jeder Datenträger auf einen solchen Schlüssel Zugriff hat. Die Authentisierung ist dann erfolgreich, wenn die symmetrischen Schlüssel beider Datenträger übereinstimmen. Gegebenenfalls kann die gegenseitige Authentisierung auch basierend auf einem asymmetrischen Verfahren erfolgen, bei dem zur Authentisierung ein asymmetrisches Schlüsselpaar aus einem privaten und einem öffentlichen Schlüssel verwendet wird. Der private Schlüssel ist dabei vorzugsweise auf dem ersten Datenträger hinterlegt, und der zweite Datenträger hat Zugriff auf den entsprechenden, dem privaten Schlüssel zugeordneten öffentlichen Schüssel.

Um die Sicherheit des Verfahrens in Bezug auf eine unbefugte Nutzung durch einen Dritten weiter zu erhöhen, ist in einer bevorzugten Variante des erfindungsgemäßen Verfahrens dem Aufbau der Kommunikationsverbindung eine Benutzer-Authentisierung, insbesondere über ein Kennwort und/oder über biometrische Daten, vorgeschaltet. Solche biometrischen Daten können insbesondere den Fingerabdruck des Benutzers umfassen, der über einen entsprechenden Leser eingelesen wird.

Die Aktivierungsdaten, welche zur Aktivierung des ersten Datenträgers auf diesen überspielt werden, können beliebig ausgestaltet sein. In einer Ausführungsform der Erfindung umfassen die Aktivierungsdaten auf dem ersten Datenträger zu hinterlegende Personalisierungsdaten, d.h. der bereitgestellte erste Datenträger ist im inaktiven Zustand noch nicht vollumfänglich personalisiert. Solche Daten können insbesondere biometrische Daten, wie z.B. Fingerabdrücke, oder auch beliebige andere personenspezifische Daten, wie z.B. medizinische Daten oder Rezepte des Benutzers, umfassen. Gegebenenfalls können die Aktivierungsdaten auch nicht unmittelbar personenspezifische Daten umfassen, wie z.B. kryptographische Schlüssel und/oder elektronische Zertifikate. In einer weiteren Variante können die Aktivierungsdaten auch nur ein durch den Benutzer einzugebendes Passwort umfassen, welches dem Benutzer vorab auf gesichertem Weg mitgeteilt wurde und auch auf dem ersten Datenträger hinterlegt ist. Erfindungsgemäß können auch Kombinationen der genannten Daten als Aktivierungsdaten verwendet werden, wobei nur im Falle, dass alle Aktivierungsdaten an den ersten Datenträger übermittelt werden, die Aktivierung des ersten Datenträgers erfolgt.

In einer weiteren, besonders bevorzugten Ausführungsform des erfindungsgemäßen Verfahrens wird eine unberechtigte Nutzung des zweiten Datenträgers nach der Aktivierung des ersten Datenträgers verhindert. Dies wird dadurch erreicht, dass nach der Aktivierung des ersten Datenträgers der zweite Datenträger automatisch inaktiv wird.

Neben dem oben beschriebenen Verfahren betrifft die Erfindung ferner ein System zum Aktivieren eines tragbaren Datenträgers, wobei das System einen ersten und einen zweiten tragbaren Datenträger umfasst, welche derart ausgestaltet sind, dass jede Variante des erfindungsgemäßen Verfahrens mit diesen beiden Datenträgern durchführbar ist.

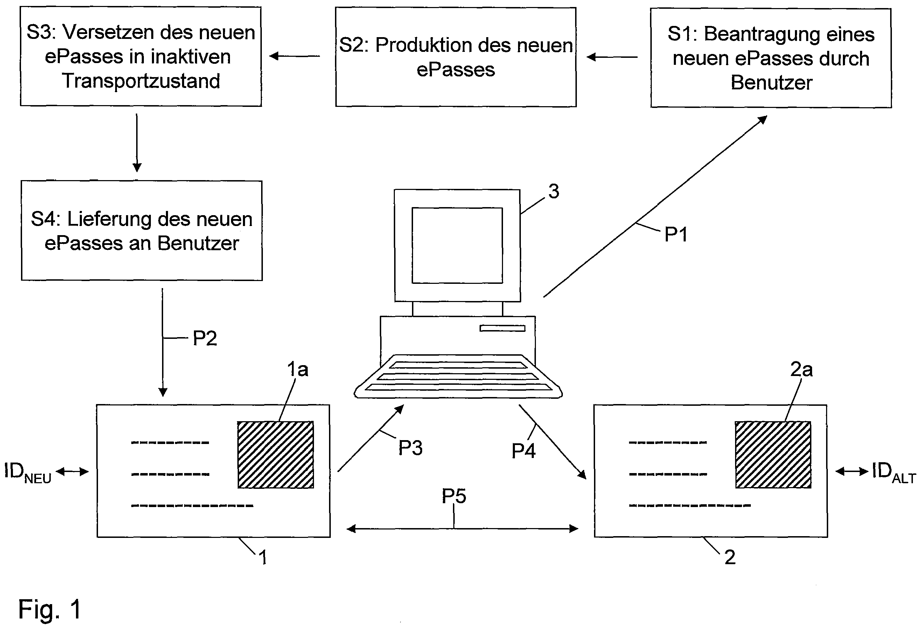

Ein Ausführungsbeispiel der Erfindung wird nachfolgend anhand der beigefügten Fig. 1 detailliert beschrieben. Diese Figur zeigt in schematischer Darstellung den Ablauf einer Ausführung des erfindungsgemäßen Verfahrens.

In Fig. 1 ist ein Beispiel der Erfindung gezeigt, in dem ein Benutzer einen sogenannten ePass (ePass = elektronischer Pass) neu beantragt und mit seinem elektronischen Altpass aktiviert. Ein elektronischer Pass enthält dabei einen entsprechenden Halbleiter-Chip mit darauf gespeicherten personalisierten Daten des Nutzers, etwa biometrischen Datenwie z.B. Fingerabdrücke. Ein elektronischer Pass stellt in diesem Sinne eine Ausführungsform eines tragbaren Datenträgers in der Terminologie von Anspruch 1 dar. Die Erfindung ist jedoch nicht auf elektronische Pässe beschränkt, sondern kann sich auch auf beliebige andere tragbare Datenträger, insbesondere ressourcenbeschränkte tragbare Datenträger, d.h. Datenträger, die entweder gar keine oder nur eine rudimentäre Nutzerschnittstelle mit entsprechenden Ein- und Ausgabemitteln besitzen und die über keine eigene vollwertige, einen autarken Regelbetrieb ermöglichende Energieversorgung aufweisen. Ressourcenbeschränkte Datenträger dieser Art sind z.B. auch Ausweisdokumente aller Art, Gesundheitskarten, Bankkarten (z.B. EC- bzw. Kreditkarten) und dergleichen.

In der Ausführungsform der Fig. 1 beantragt ein Nutzer über einen lokalen PC 3 von zu Hause aus online bei einem entsprechenden Meldeamt einen neuen ePass, wie durch den Schritt S1 und den Pfeil P1 angedeutet ist. Der PC 3 des Nutzers ist dabei mit dem Internet verbunden, und der Nutzer geht auf die entsprechende Seite des Meldeamts, um dort einen neuen Pass zu beantragen. Hierfür gibt er entsprechende zur Identifizierung bzw. zur persönlichen Zuordnung geeignete Daten seines alten ePasses ein, der in Fig. 2 mit Bezugszeichen 2 bezeichnet ist und optisch u.a. mit einem entsprechenden Bild 2a des Benutzers personalisiert ist. Ferner ist dem Pass 2 eine eindeutige Identität ID_{ALT} zugeordnet und der Pass 2 unterstützt einen Mechanismus zur sicheren Identifizierung, etwa die aus dem Stand der Technik bekannte EAC-Identifizierung (EAC = Extended Access Control).

Nach dem Abschluss der Online-Beantragung wird in der Meldestelle die Herstellung des neuen ePasses veranlasst, der schließlich in einer entsprechenden Produktionsanlage in Schritt S2 produziert wird; der Neupass ist in Fig. 1 mit Bezugszeichen 1 bezeichnet. In einer ersten Ausführung der Erfindung wird der Neupass 1 körperlich fertig vorhergestellt und analog zum Altpass optisch personalisiert, etwa mit einem Bild 1a des Benutzers. Elektronisch wird der Neupass 1 vorpersonalsiert, indem der IC mit den benötigten Grundfunktionalitäten ausgestattet und die Personalisierungsstrukturen angelegt werden. Zweckmäßig wird auch bereits ein Teil der Personalisierungsdaten, etwa unveränderliche Daten wie der Name eine Benutzers, in den IC eingeschrieben. Zumindest einige Daten, z.B. veränderliche Daten wie die Adresse, nachträglich aufgebrachte Funktionalitäten oder Schlüssel, werden im Rahmen der Produktion noch nicht eingetragen oder nur in einer gesperrten Form. Der Neupass 1 weist weiter eine eindeutige Identität ID_{NEU} auf, die vorzugsweise auch in dem IC hinterlegt wird. Ferner werden im IC kryptographische Schlüssel hinterlegt, mit denen später die Aktivierung des Neupasses 1 erfolgen kann, sowie ggf. zweckmäßig auch solche kryptographischen Schlüssel, mit den der Neupass 1 zu einem noch späteren Zeitpunkt ggf. selbst die Rolle eines Altpasses einnehmen kann, um dann einen weiteren Neupass zu aktivieren..

Nach Abschluss der Produktion wird der neue elektronische Pass in Schritt S3 in einen sog. Transportzustand versetzt, der einem inaktiven Zustand im Sinne von Anspruch 1 entspricht. In diesem Zustand sind die elektronischen Funktionalitäten des elektronischen Passes außer Funktion gesetzt und der Pass muss vor seiner ersten Verwendung erst aktiviert werden. Diese Aktivierung erfolgt unter Zuhilfenahme des bei der Antragstellung verwendeten Altpasses 2, wie nachfolgend noch näher beschrieben wird.

Der Neupass 1 wird sodann direkt dem Benutzer nach Hause zugestellt, was durch den Schritt S4 und einen entsprechenden Pfeil P2 angedeutet ist. Es ist also nicht mehr notwendig, dass der Benutzer den Pass persönlich abholt, etwa bei einer zentralen Meldestelle. Ebenso braucht der Nutzer bei der in Fig. 1 beschriebenen Online-Beantragung auch nicht persönlich bei der Meldestelle zur Beantragung des Neupasses erscheinen.

Wie oben erwähnt, muss der Nutzer den Neupass 1 geeignet aktivieren, damit er ihn zu Identifizierungszwecken einsetzen kann. Die Aktivierung erfolgt dabei derart, dass entsprechende Aktivierungsdaten von dem Altpass 2 direkt auf den Neupass 1 übertragen werden. In einer bevorzugten Ausführungsform sind diese Aktivierungsdaten Personalisierungsdaten, wie z.B. biometrische Daten des Nutzers, welche bei der Produktion noch nicht in dem Neupass 1 hinterlegt wurden. Zur Aktivierung ist es erforderlich, dass sich die beiden Pässe 1 und 2 gegenseitig authentisieren, um hierdurch sicherzustellen, dass nur der Altpass 2 die Aktivierung des Neupasses 1 durchführen kann. Um diese Authentisierung zu ermöglichen, werden bei der Herstellung des Neupasses 1 Authentisierungsdaten auf dem Neupass 1 aufgebracht. Der Altpass 2 ist dabei entsprechend vorbereitet, so dass mit den Authentisierungsdaten ausschließlich eine Authentisierung zwischen Neupass 1 und Altpass 2 möglich ist. Das heißt, auch der Altpass 2 enthält geeignete Authentisierungsdaten bzw. hat Zugriff auf solche, um eine ausschließliche Authentisierung mit dem Neupass sicherzustellen.

In einer Ausführungsform des erfindungsgemäßen Verfahrens erfolgt eine asymmetrische Authentisierung zwischen Neupass 1 und Altpass 1. In diesem Fall enthält der Neupass einen geheimen privaten Schlüssel und ein Berechtigungszertifikat, welche er bei seiner bestimmungsgemäßen Verwendung bei der sogenannte Terminal-Authentisierung des EAC-Verfahrens einsetzt. Dem geheimen privaten Schlüssel ist ein entsprechender öffentlicher Schlüssel zugeordnet, der auf dem Altpass hinterlegt ist bzw. den Altpass über eine entsprechende PKI-Infrastruktur (PKI = Public Key Infrastructure) von einer Zertifizierungsstelle bereitgestellt wird. Mit Hilfe des privaten Schlüssels der Identität ID_{NEU} und dem entsprechenden öffentlichen Schlüssel erfolgt dann die Authentisierung mit einem aus dem Stand der Technik bekannten Verfahren, wie z.B. einem Challenge-Response-Verfahren. Anstatt einer asymmetrischen Authentisierung kann alternativ auch eine symmetrische Authentisierung basierend auf einem symmetrischen Schlüssel erfolgen. Der symmetrische Schlüssel ist dabei auf dem Neupass 1 hinterlegt und auch dem Altpass 2 bekannt. Insbesondere ist der symmetrische Schlüssel auch auf dem Altpass 2 gespeichert.

Durch Überprüfung der Übereinstimmung zwischen den symmetrischen Schlüsseln kann auf diese Weise ebenfalls eine gegenseitige Authentisierung stattfinden.

Die Speicherung der Schlüssel für die Authentisierung auf dem Altpass 2 kann z.B. im Rahmen seiner Produktion erfolgt sein oder im Zuge einer Kontaktaufnahme zu einer Meldestelle, etwa auch im Rahmen der Beantragung des Neupasses.

In der hier beschriebenen Ausführungsform erlaubt der Neupass 1 in seinem inaktiven Transportzustand lediglich die Ausführung der folgenden beiden Secure-Messaging-Kommandos:
1. PSO: ENCIPHER
2. PSO: COMPUTE CC

Diese Kommandos sind an sich aus dem Stand der Technik bekannt und werden deshalb nicht näher erläutert.

Zur Aktivierung des Neupasses 1 stellt der Benutzer eine lokale Verbindung über einen Host zu dem Neupass 1 her, wie durch den Pfeil P3 angedeutet ist. Der Host kann insbesondere ein üblicher PC 3 sein, aber auch die Form von vernetzten Geräten haben. Der Host kann dann z.B. ein öffentlich zugängliches Terminal sein. An dem im folgenden stets zugrundgelegten PC des Nutzers ist eine entsprechende lokale Kommunikationsschnittstelle vorgesehen, die beispielsweise drahtlos ausgestaltet sein und auf Nahfeld-Kommunikation (englisch: NFC = Near Field Communication) beruhen kann. In gleicher Weise wird eine lokale Verbindung zwischen dem alten Pass 2 und dem PC 3 hergestellt, wie durch den Pfeil P4 angedeutet ist. Als zu erfüllende Bedingung für den Verbindungsaufbau ist zweckmäßig eine Authentisierung des Nutzers vorgeshen, die beispielsweise auf biometrischen Daten oder einer geeigneten PIN beruhen kann. Je nach Sicherheitsanforderung können auch die lokalen Verbindungen zwischen den Pässen 1 bzw. 2 und dem PC 3 gesichert werden, z.B. unter der Verwendung des aus dem Stand der Technik bekannten PACE-Verfahrens (PACE = Password Authenticated Connection Establishment).

Nach der Herstellung der lokalen Verbindungen erfolgt die bereits oben erwähnte gegenseitige Authentisierung zwischen der Identität ID_{ALT} des Altpasses 2 und der Identität ID_{NEU} des Neupasses 1. Bei der symmetrischen Authentisierung werden dabei die zuvor vereinbarten symmetrischen Schlüssel verwendet und bei der asymmetrischen Authentisierung das entsprechende PKI-Schlüsselpaar. Als Ergebnis der gegenseitigen Authentisierung werden kryptographisch stark geschützte Secure-Messaging-Schlüssel zwischen ID_{ALT} und ID_{NEU} vereinbart, wie durch den Doppelpfeil P5 in Fig. 1 angedeutet. Diese Schlüssel sind nur dem Neupass 1 und dem Altpass 2 und keinesfalls dem PC 3 bekannt. Auf diese Weise wird somit eine gesicherte Ende-zu-Ende-Verbindung zwischen den beiden Pässen 1 und 2 sichergestellt, auf welche Dritte und insbesondere nicht der bei der Kommunikation zwischengeschaltete PC Zugriff haben.

Über die gesicherte Ende-zu-Ende-Verbindung erfolgt schließlich die Aktivierung des Neupasses 1, indem vom Altpass 2 Aktivierungsdaten, insbesondere Personalisierungsdaten (z.B. biometrische Daten), kryptographische Schlüssel und dergleichen, an den Neupass 1 übertragen werden. Hierzu werden die Kommando-APDUs (READ BINARY) vom zwischengeschalteten Host 3 generiert. Da der Host nicht im Besitz der entsprechenden Secure-Messaging-Schlüssel ist, kann er mit der Hilfe der Kommandos PSO: ENCIPHER und PSO: COMPUTE CC, welche von dem Neupass 1 bereitgestellt werden, die Kommandos für den Altpass 2 im korrekten Secure-Messaging-Format erstellen lassen. Der Altpass 2 sendet dann als Antwort die verschlüsselten und integritätsgeschützten Daten über die gesicherte Ende-zu-Ende-Verbindung. Der Host 3 erhält oder sieht die Daten zu keiner Zeit im Klartext. Die Daten werden in einem UPDATE BINARY-Kommando eingebettet, welches dann an den Neupass 1 zum Setzen der Daten gesendet wird. Um ein wiederholtes Einspielen der gleichen Daten zu verhindern, wird vorzugsweise ein entsprechender Send Sequence Counter (SSC) von den Kommandos PSO: ENCIPHER und PSO: COMPUTE CC gepflegt. Im Rahmen der Aktivierung gehen alle auf dem Altpass 2 vorhandenen Berechtigungen und Funktionalitäten von diesem auf den Neupass 1 über. Nach abgeschlossener Aktivierung ist der Neupass 1 unmittelbar einsatzbereit und kann mit allen Funktionalitäten genutzt werden. Eine zusätzliche Kontaktaufnahme zum Hersteller oder zu einer Zentralstelle ist nicht erforderlich.

Die im Vorangegangenen beschriebene Ausführungsform des erfindungsgemäßen Verfahrens weist eine Reihe von Vorteilen auf. Durch eine entsprechende Verknüpfung zwischen der Identität ID_{ALT} des Altpasses und der Identität ID_{NEU} des Neupasses während der Antragsphase des Neupasses und die gegenseitige Authentisierung der Pässe bei der Aktivierung des Neupasses wird zum einen verhindert, dass mit der Identität des Altpasses ein elektronisches Dokument, welches nicht aus dem Prozess der Beantragung des Neupasses hervorgeht (z.B. eine Fälschung), aktiviert bzw. personalisiert werden kann. Ebenso kann der Neupass mit seiner Identität ID_{NEU} nicht mit einem anderen Dokument, welches eine andere als die Identität ID_{ALT} aufweist, z.B. mit einem manipulierten oder gefälschten Dokument, aktiviert bzw. personalisiert werden.

Da die logische Verbindung zwischen der Identität ID_{ALT} des Altpasses 2 und der Identität ID_{NEU} des Neupasses 1 auf direkt zwischen den Pässen vereinbarten Schlüsseln beruht, ist es für einen Angreifer nicht möglich, diese Kommunikation zu entschlüsseln. Manipulationen der übertragenen Daten werden durch den Integritätsschutz erkannt und die Verwendung manipulierter Daten auf diese Weise verhindert. Darüberhinaus wird durch den oben beschriebenen fortlaufenden Send-Sequence-Counter sichergestellt, dass ein wiederholtes Einspielen von Aktivierungsdaten innerhalb derselben Personalisierungssitzung verhindert wird. Auf diese Weise kann eine entsprechende Manipulation durch einen Angreifer erkannt werden.

Die oben beschriebene Ausführungsform des erfindungsgemäßen Verfahrens wurde am Beispiel der Beantragung eines neuen elektronischen Passes beschrieben, der durch einen Nutzer mit Hilfe des alten Passes aktiviert werden kann. Das Verfahren ist jedoch auch auf beliebige andere tragbare Datenträgerim eingangs definierten Sinne, etwa andere Ausweisdokumente oder Visa, anwendbar.

Insbesondere beim Einsatz des Verfahrens für Ausweisdokumentekommt zweckmäßig eine Variante des erfindungsgemäßen Verfahrens zum Einsatz, bei dem die Daten auf dem alten Dokument 2 nach entsprechender Aktivierung des neuen Dokuments 1 gelöscht oder unbrauchbar gemacht werden, so dass das alte Dokument 2 ungültig wird. Auf diese Weise kann sichergestellt werden, dass trotz einer Online-Beantragung und einer dezentralen Aktivierung des neuen Ausweisdokuments 1 immer nur genau ein Dokument Gültigkeit besitzt und somit insbesondere biometrische Daten nicht ausgetauscht und manipuliert werden können. Das Konzept, das die Daten auf dem alten Dokument 2 zu löschen oder unbrauchbar zu machen läßt sich selbstverständlich auch für andere Arten von Dokumenten bzw. tragbaren Datenträgern anwenden.

In dem erfindungsgemäßen Verfahren ist es ferner nicht zwingend erforderlich, dass der neue zu aktivierende Datenträger 1 bereits vorab personalisiert ist. Vielmehr kann die Personalisierung des neuen Datenträgers 1 auch ausschließlich über eine Ende-zu-Ende-Verbindung zwischen altem und neuem Datenträger erfolgen, so dass bei der Produktion des neuen Datenträgers 1 vorgefertigte, generische Rohlinge verwendet werden können, die lediglich für die Aktivierung geeignet elektronisch vorbereitet werden sein müssen. Die eigentliche Individualisierung des Datenträgers 1 erfolgt dann nach Zustellung beim Benutzer über die Ende-zu-Ende-Verbindung.

Das erfindungsgemäße Verfahren kann gegebenenfalls auch dazu genutzt werden, um die Daten eines Datenträgers auf einem Backup-Datenträger zu sichern. Dabei besitzt der Benutzer neben dem eigentlichen, in Verwendung befindlichen Datenträger auch einen weiteren Datenträger in der Form eines Backups des eigentlichen Datenträgers. Der Backup-Datenträger kann dabei entweder für sich alleine funktionsfähig sein bzw. gemacht werden, oder eine eigenständige Funktionalität des Backup-Datenträgers kann grundsätzlich unterbunden sein. Im letzteren Fall kann der Benutzer mit dem erfindungsgemäßen Verfahren einen neuen Datenträger beantragen und diesen neuen Datenträger mit Hilfe des Backup-Datenträgers aktivieren. Ebenso kann das erfindungsgemäße Verfahren dazu genutzt werden, um einen Backup-Datenträger zu beantragen und mit dem in Verwendung befindlichen Datenträger zu aktivieren, so dass dem Benutzer bei Verlust bzw. Diebstahl des Datenträgers sofort ein Ersatz zur Verfügung steht. In dieser Variante ist sicherzustellen, dass nach Aktivierung des Backup-Datenträgers der alte Datenträger weiter funktionsfähig bleibt.

Das erfindungsgemäße Verfahren ist nicht darauf beschränkt, dass der neue, aktivierte Datenträger einen Ersatz für den alten Datenträger darstellt. Vielmehr besteht auch die Möglichkeit, dass durch die Aktivierung bestimmte Authentisierungsdaten, wie z.B. Schlüssel, ein Client-Zertifikat für eine Client-Server-Authentisierung und dergleichen, von einem Datenträger auf den anderen Datenträger übertragen werden, ohne dass für jeden neuen Datenträger ein eigenes Schlüsselpaar bzw. Zertifikat beantragt werden muss. Es wird somit die Möglichkeit geschaffen, Authentisierungsdaten sicher von einem Datenträger auf einen anderen zu übertragen.

An dem erfindungsgemäßen Verfahren können gegebenenfalls auch zwei verschiedenartige elektronische Dokumente beteiligt sein. Beispielsweise kann ein Nutzer mittels eines Reisepasses online ein Visum beantragen, welches ihm anschließend zugestellt wird und welches er mit Hilfe des bei der Beantragung verwendeten Reisepasses aktivieren kann.

## Patentansprüche

1. Verfahren zum Aktivieren eines ersten tragbaren Datenträgers (1) mit Hilfe eines zweiten tragbaren Datenträgers (2), wobei es sich bei dem ersten und dem zweiten tragbaren Datenträger um ein elektronisches Identitätsdokument handelt, bei dem:
- eine Kommunikationsverbindung zwischen dem ersten und zweiten Datenträger (1, 2) aufgebaut wird, über welche sich der erste und zweite Datenträger (1, 2) basierend auf den Authentisierungsdaten gegenseitig authentisieren und eine kryptographisch gesicherte Ende-zu-Ende-Verbindung herstellen;
- eine Aktivierung des ersten Datenträgers (1) durchgeführt wird, indem der zweite Datenträger (2) über die Ende-zu-Ende-Verbindung den ersten Datenträger (1) durch Übermitteln von Aktivierungsdaten aktiviert,
**dadurch gekennzeichnet, daß**
- der erste tragbare Datenträger (1) einem Benutzer in einem inaktiven Zustand bereitgestellt wird, wobei in dem inaktiven Zustand die bestimmungsgemäße Verwendung des ersten Datenträgers (1) nicht möglich ist, wobei auf den ersten tragbaren Datenträger (1) von einer zentralen Instanz Authentisierungsdaten aufgebracht werden, die eine gegenseitige Authentisierung mit dem zweiten tragbaren Datenträger (2) erlauben, wobei der zweite tragbare Datenträger (2) im Rahmen seiner Produktion oder im Zuge einer Kontaktaufnahme zu der zentralen Instanz mit geeigneten Authentifizierungsdaten versehen wird, um eine Authentifizierung mit dem ersten Datenträger (1) sicherzustellen,- im Rahmen der Aktivierung alle auf dem zweiten tragbaren Datenträger (2) vorhandenen Berechtigungen und Funktionalitäten von diesem auf den ersten tragbaren Datenträger (1) übertragen werden und dieser nach abgeschlossener Aktivierung unmittelbar einsatzbereit ist und mit allen Funktionalitäten genutzt werden kann.

2. Verfahren nach Anspruch 1, **dadurch gekennzeichnet, dass** der erste und/oder zweite Datenträger (1, 2) ein elektronisches Ausweisdokument und/oder ein elektronisches Visum und/oder eine elektronische Fahrkarte und/oder eine elektronische Gesundheitskarte und/oder eine elektronische Bankkarte umfassen.

3. Verfahren nach einem der vorhergehenden Ansprüche, **dadurch gekennzeichnet, dass** der erste Datenträger (1) im inaktiven Zustand bereits zumindest teilweise optisch und/ oder elektronisch personalisiert ist.

4. Verfahren nach einem der vorhergehenden Ansprüche, **dadurch gekennzeichnet, dass** die zwischen dem ersten und zweiten Datenträger (1, 2) aufgebaute Kommunikationsverbindung eine lokale Kommunikationsverbindung im Einflussbereich des Benutzers ist, insbesondere unter Zwischenschaltung eines lokalen Rechners (3).

5. Verfahren nach einem der vorhergehenden Ansprüche, **dadurch gekennzeichnet, dass** die gegenseitige Authentisierung eine symmetrische Authentisierung mit einem symmetrischen Schlüssel ist.

6. Verfahren nach einem der vorhergehenden Ansprüche, **dadurch gekennzeichnet, dass** die gegenseitige Authentisierung eine asymmetrische Authentisierung mit einem asymmetrischen Schlüsselpaar aus einem privaten und einem öffentlichen Schlüssel ist.

7. Verfahren nach einem der vorhergehenden Ansprüche, **dadurch gekennzeichnet, dass** dem Aufbau der Kommunikationsverbindung eine Benutzer-Authentisierung, insbesondere über ein Kennwort und/oder über biometrische Daten, vorgeschaltet ist.

8. Verfahren nach einem der vorhergehenden Ansprüche, **dadurch gekennzeichnet, dass** die Aktivierungsdaten auf dem ersten Datenträger (1) zu hinterlegende Personalisierungsdaten, insbesondere biometrische Daten und/oder andere personenspezifische Daten, umfassen.

9. Verfahren nach einem der vorhergehenden Ansprüche, **dadurch gekennzeichnet, dass** die Aktivierungsdaten einen oder mehrere kryptographische Schlüssel und/oder elektronische Zertifikate umfassen.

10. Verfahren nach einem der vorhergehenden Ansprüche, **dadurch gekennzeichnet, dass** die Aktivierungsdaten ein durch den Benutzer einzugebendes Passwort umfassen.

11. Verfahren nach einem der vorhergehenden Ansprüche, **dadurch gekennzeichnet, dass** nach der Aktivierung des ersten Datenträgers (1) der zweite Datenträger (2) inaktiv wird.

## Claims

1. A method for activating a first portable data carrier (1) with the aid of a second portable data carrier (2), wherein the first and the second portable data carrier are an electronic identity document, wherein:
- a communication connection is set up between the first and the second data carrier (1, 2), via which the first and the second data carrier (1, 2) mutually authenticate each other on the basis of the authentication data and establish a cryptographically secured end-to-end connection;
- an activation of the first data carrier (1) is carried out by the second data carrier (2) activating the first data carrier (1) via the end-to-end connection by transmitting activation data,
**characterized in that**
- the first portable data carrier (1) is supplied to a user in an inactive state, wherein it is not possible to employ the first data carrier (1) properly in the inactive state, wherein authentication data are applied to the first portable data carrier (1) by a central entity, said authentication data permitting a mutual authentication with the second portable data carrier (2), wherein the second portable data carrier (2) is equipped with suitable authentication data within the scope of its production or in the course of seeking contact to the central entity in order to ensure an authentication with the first data carrier (1),
- within the scope of the activation all authorizations and functionalities present on the second portable data carrier (2) are transferred by said second portable data carrier to the first portable data carrier (1) and, after the conclusion of the activation, said first portable data carrier is immediately ready for use and can be utilized with all functionalities.

2. The method according to claim 1, **characterized in that** the first and/ or the second data carrier (1, 2) comprise an electronic identification document and/ or an electronic visa and/or an electronic ticket and/ or an electronic health card and/ or an electronic bank card.

3. The method according to any of the preceding claims, **characterized in that** the first data carrier (1) in the inactive state has already been personalized at least partly optically and/or electronically.

4. The method according to any of the preceding claims, **characterized in that** the communication connection set up between the first and the second data carrier (1, 2) is a local communication connection in the area of influence of the user, in particular with a local computer (3) being interposed.

5. The method according to any of the preceding claims, **characterized in that** the mutual authentication is a symmetric authentication with a symmetric key.

6. The method according to any of the preceding claims, **characterized in that** the mutual authentication is an asymmetric authentication with an asymmetric pair of keys of a private and a public key.

7. The method according to any of the preceding claims, **characterized in that** the setup of the communication connection is preceded by a user authentication, in particular via a password and/ or via biometric data.

8. The method according to any of the preceding claims, **characterized in that** the activation data comprise personalization data, in particular biometric data and/ or other person-specific data, to be stored on the first data carrier (1).

9. The method according to any of the preceding claims, **characterized in that** the activation data comprise one or several cryptographic keys and/ or electronic certificates.

10. The method according to any of the preceding claims, **characterized in that** the activation data comprise a password to be input by the user.

11. The method according to any of the preceding claims, **characterized in that** after the activation of the first data carrier (1) the second data carrier (2) becomes inactive.

## Revendications

1. Procédé d'activation d'un premier support de données portable (1) à l'aide d'un deuxième support de données portable (2), cependant que le premier ainsi que le deuxième support de données portable consiste en un document électronique d'identité, dans lequel :
- une liaison de communication entre le premier et le deuxième support de données (1, 2) est établie, par l'intermédiaire de laquelle le premier et le deuxième support de données (1, 2) s'authentifient mutuellement sur la base des données d'authentification et créent une liaison de bout en bout sécurisée cryptographiquement ;
- une activation du premier support de données (1) est effectuée, ce qui a lieu en ce que le deuxième support de données (2) active, par l'intermédiaire de la liaison de bout en bout, le premier support de données (1) par le transfert de données d'activation,
**caractérisé en ce que**
- le premier support de données portable (1) est mis à la disposition d'un utilisateur dans un état inactif, cependant que, à l'état inactif, l'emploi du premier support de données (1) conforme à sa destination n'est pas possible, cependant que, sur le premier support de données portable (1), par une instance centrale, des données d'authentification sont déposées, lesquelles permettent une authentification mutuelle avec le deuxième support de données portable (2), cependant que le deuxième support de données portable (2), dans le cadre de sa production ou au cours d'une prise de contact vis-à-vis de l'instance centrale, est pourvu de données d'authentification appropriées pour assurer une authentification avec le premier support de données (1),
- dans le cadre de l'activation, toutes les autorisations et fonctionnalités se trouvant sur le deuxième support de données portable (2) sont transmises par ce dernier sur le premier support de données portable (1), et ce dernier, après activation achevée, est directement prêt à l'emploi et peut être utilisé avec toutes les fonctionnalités.

2. Procédé selon la revendication 1, **caractérisé en ce que** le premier et/ou le deuxième support de données (1, 2) comprennent un document électronique d'identité et/ou un visa électronique et/ou un billet électronique et/ou une carte électronique d'assurance maladie et/ou une carte bancaire électronique.

3. Procédé selon une des revendications précédentes, **caractérisé en ce que** le premier support de données (1) est, à l'état inactif, déjà personnalisé au moins partiellement optiquement et/ou électroniquement.

4. Procédé selon une des revendications précédentes, **caractérisé en ce que** la liaison de communication établie entre le premier et le deuxième support de données (1, 2) est une liaison de communication locale dans la zone d'influence de l'utilisateur, en particulier avec connexion intermédiaire d'un ordinateur local (3).

5. Procédé selon une des revendications précédentes, **caractérisé en ce que** l'authentification mutuelle est une authentification symétrique avec une clé symétrique.

6. Procédé selon une des revendications précédentes, **caractérisé en ce que** l'authentification mutuelle est une authentification asymétrique avec une paire de clés asymétrique composée d'une clé privée et d'une clé publique.

7. Procédé selon une des revendications précédentes, **caractérisé en ce que**, en amont de l'établissement de la liaison de communication, une authentification d'utilisateur, en particulier par le biais d'un mot de code et/ou de données biométriques, est occasionnée.

8. Procédé selon une des revendications précédentes, **caractérisé en ce que** les données d'activation sur le premier support de données (1) comprennent des données de personnalisation à enregistrer, en particulier des données biométriques et/ou d'autres données spécifiques à la personne.

9. Procédé selon une des revendications précédentes, **caractérisé en ce que** les données d'activation comprennent une ou plusieurs clés cryptographiques et/ou certificats électroniques.

10. Procédé selon une des revendications précédentes, **caractérisé en ce que** les données d'activation comprennent un mot de passe à entrer par l'utilisateur.

11. Procédé selon une des revendications précédentes, **caractérisé en ce que**, après l'activation du premier support de données (1), le deuxième support de données (2) devient inactif.
